# EUROPEAN PATENT SPECIFICATION

(11) **EP 1 193 002 B1**
(45) Date of publication and mention of the grant of the patent: **01.03.2006**
(21) Application number: 01122646.1
(22) Date of filing: 27.09.2001
(51) Int. Cl.: B09B 1/00

(54) **Permanent storage facility, particularly for the disposal of municipal solid waste**
Permanente Lagereinrichtung, insbesondere zur Entsorgung von festem Hausmüll
Installation de stockage permanent, en particulier pour l'élimination des déchets urbains solides

(30) Priority: 02.10.2000 IT TV000121
(43) Date of publication of application: 03.04.2002
(73) Proprietor: France Dechets S.A., 92758 Nanterre (FR)
(72) Inventor: Puglierin, Livio, 21030 Altivole (Treviso) (IT)
(74) Representative: Modiano, Micaela Nadia

(56) References cited:
- BE-A- 1 011 046
- DE-A- 3 131 100
- DE-A- 3 425 783
- FR-A- 2 524 351
- US-A- 3 941 556

## Description

The present invention relates to a permanent storage facility, particularly a landfill for the disposal of municipal solid waste.

Landfills for municipal solid waste are currently used which are obtained by performing an excavation that is filled over time by successive accumulation of layers of the waste.

The stratified deposition of the waste produces, after a few months, the degradation of the organic substances that are present, producing biogas mainly constituted by methane.

This biogas can be collected by way of appropriate aspiration ducts, so that it can be sent to a disposal or utilization plant, which usually comprises at least one burner.

In most landfills of the known type, biogas collection is performed during the passive management of the landfill, after it has been closed down and then covered with a layer of soil.

Biogas collection is performed by producing a plurality of vertical shafts that usually end with an external stack; in each one of these shafts, the biogas is burned with the sole purpose of eliminating the possibility of explosions thereof and therefore without obtaining any advantage from the energy-yielding qualities of the gas.

In addition to constituting an enormous waste of fuel, this known type of landfill has a first drawback, which arises from the great danger linked to the poor collection of biogas that can be achieved by way of the vertical shafts.

In fact it has been demonstrated that the biogas generated deep down by the anaerobic degradation of municipal solid waste, compressed by the overlying mass of other waste, can migrate underground for hundreds of meters, following diffusion pathways that are privileged because of their high permeability.

This leads to highly dangerous situations, since the biogas can accumulate in cavities or enclosed spaces that are partially impermeable to gas, such as for example cellars of buildings located close to the landfill; in the past, the evident danger of these situations has caused more than once explosion proximate to or inside civil buildings, with consequent danger for the safety of their occupants.

Furthermore, even if the biogas migrated underground does not accumulate in a closed space but is able to reach the surface, there is still the problem of having to obviate these dangerous gas leaks, which also cause unpleasant odors due to the presence of substances such as for example sulfur dioxide, mercaptans or volatile fatty acids, which are characteristic of anaerobic decompositions and are perceivable even at extremely low concentrations.

Another disadvantage of this known type of landfill is the long duration of the period of activity of anaerobic fermentation, with consequent high costs related to the requirements of passive management of the facility after its closure following its active cultivation.

Accordingly, there is also the drawback of having long waiting times before permanent environmental requalification of the region used for the landfill and of the high danger, extending over years, entailed by the landfill.

A variation of this known type of landfill has a biogas conveyance duct that connects the free ends of the vertical shafts, as disclosed in document FR-A-2 524 351.

A compressor for aspirating the collected biogas and for sending it to a disposal facility or to a plant for its utilization is associated with said conveyance duct.

These facilities usually comprise one or more burners suitable to convert the energy produced by the combustion of the biogas, for example by generating electric power or another form of energy.

As regards the danger entailed by biogas leaks and the time and costs for permanent requalification of the utilized area, these known types of landfill suffer the same problems as analyzed above.

Another drawback is further linked to effective and safe use of the recovered biogas, since said biogas is constituted by a mixture of a plurality of gases, including mainly methane, together with a significant amount of oxygen.

The danger lies in the fact that when the oxygen percentage approaches approximately 15% of the total, the biogas does not bum correctly but tends to explode, entailing risks of damage to the facility and danger for any operators who might be present.

The aim of the present invention is to solve the noted technical problems, eliminating the drawbacks of the cited known art by providing an invention that allows to obtain a permanent storage facility for the disposal of municipal solid waste that has a high biogas collection rate, with a consequent reduced level of danger of uncontrolled migrations of said biogas.

Within the above aim, an object of the invention is to provide a facility that allows to collect biogas of high quality, with a low oxygen content, so as to allow optimum recovery and use thereof in conditions of maximum safety.

Another important object is to provide a facility that allows to have a low duration of the period of activity of anaerobic fermentation, with a consequent reduction of the costs related to the requirements of passive management of the landfill.

A further object of the invention is to further reduce the retention times of the biogas and of the percolate in the permanent storage facility, with an overall increase in its safety.

Another object is to provide a facility that has a high rate of settling of the deposited waste, with consequent recovery and provision of available residual volume already during the active management of the facility.

Another object is to provide a permanent storage facility whose production costs are low with respect to the environmental, economic and safety benefits that it provides.

This aim and these and other objects that will become better apparent hereinafter are achieved by a permanent storage facility, particularly for the disposal of municipal solid waste, comprising a plurality of horizontal drainage systems that are connected to each other and to a device for aspirating the generated biogas, characterized in that said horizontal drainage systems are arranged in a grid, so as to form one or more superimposed layers, said horizontal drainage systems being constituted by a loose stone layer that is permeable to liquids and inside which there are first biogas conveyance means, second percolate conveyance means, and third means for separating one another said first and second conveyance means.

Further characteristics and advantages of the invention will become better apparent from the detailed description of a particular embodiment, illustrated only by way of non-limitative example in the accompanying drawings, wherein:
Figures 1 and 2 are respectively a front view and a side view of the structure of a mixed drainage system;

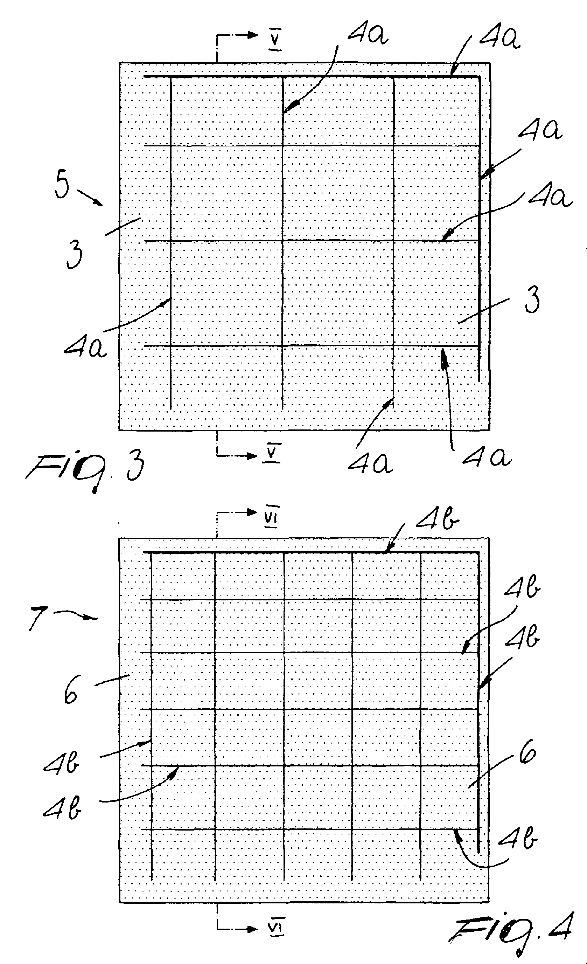

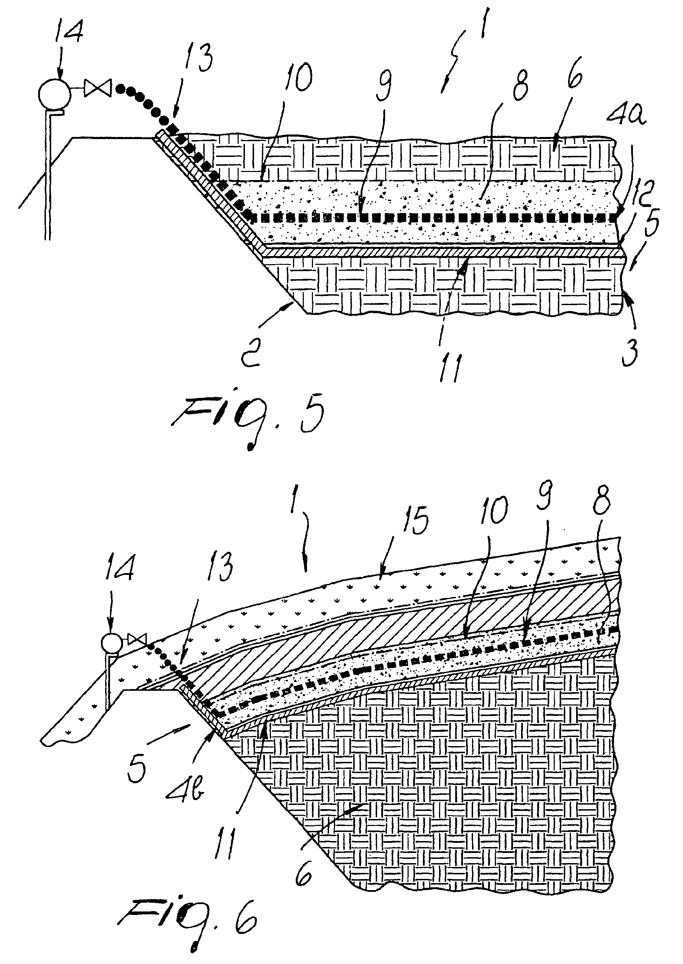

Figures 3 and 4 are top views of a first level and a second level in the provision of a landfill;
Figures 5 and 6 are sectional side views of the first and second levels of the landfill;

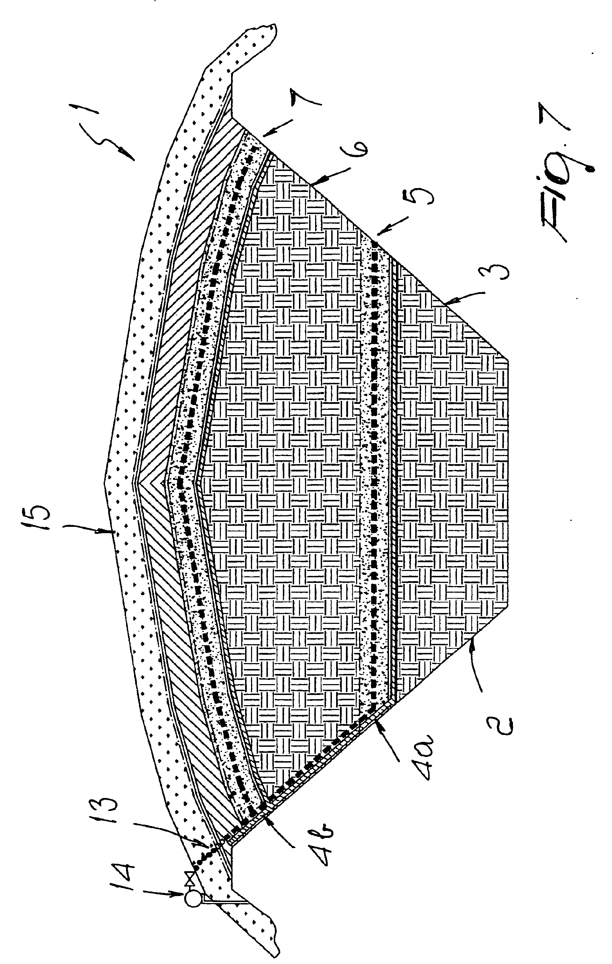

Figure 7 is a sectional side view of the landfill.

With reference to the figures, the reference numeral 1 designates a permanent storage facility, and therefore a landfill, particularly usable for the disposal of municipal solid waste.

The landfill 1 is usually produced starting from an excavation 2, in which a first layer of municipal solid waste, designated by the reference numeral 3, is placed.

Multiple trenches are conveniently formed at the first layer 3, and a first horizontal drainage system, designated by the reference numeral 4a, is placed in each one of the trenches.

The shape of the first horizontal drainage system 4a has a transverse cross-section that is advantageously trapezoidal or rectangular or rhomboidal or square; however, different shapes, such as for example a triangular shape with one vertex directed downward, are not ruled out.

The first horizontal drainage systems 4a are connected one another so as to form a grid, preferably by arranging them along two mutually perpendicular orientations, so as to constitute a first level designated by the reference numeral 5.

In this particular embodiment, a second layer of municipal solid waste, designated by the reference numeral 6, is then placed above the first level 5, and a second level 7 is provided at the second layer; the second level is superimposed on the first level 5 and is constituted by second horizontal drainage systems 4b that are advantageously identical to the first horizontal drainage systems.

The arrangement of the second drainage systems of the second level 7 can be advantageously staggered with respect to the arrangement of the first drainage systems of the first level 5; likewise, it is possible to provide other levels of drainage systems that are superimposed on each other and on the second level 7.

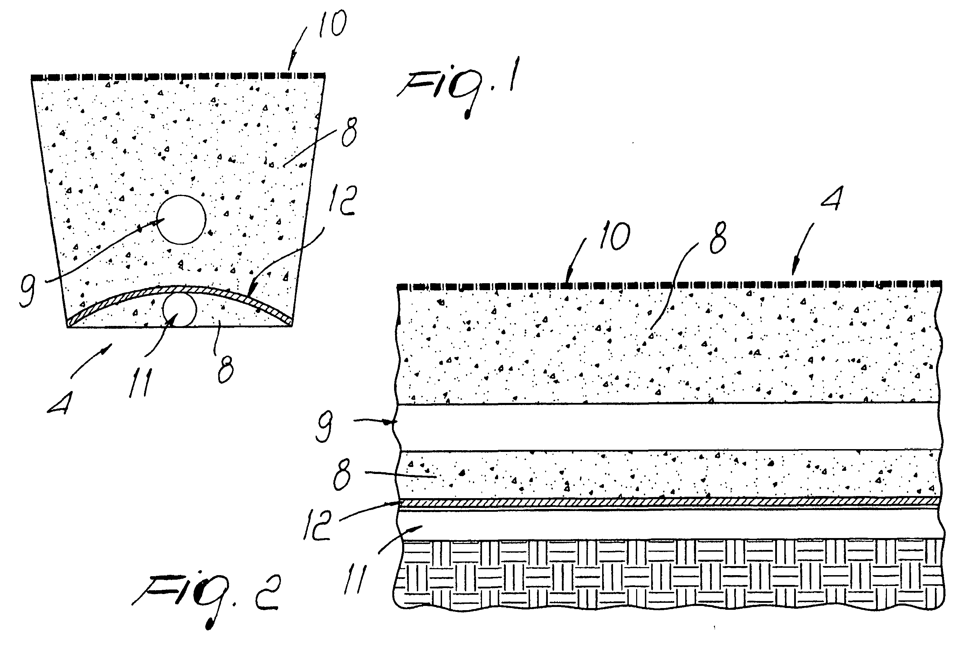

Each one of the first and second horizontal drainage systems 4a and 4b, of which Figures 1 and 2 illustrate an embodiment generally designated by the reference numeral 4, is preferably constituted by a loose stone layer 8 of a material that is permeable to liquids, advantageously made of washed gravel, inside which there are first biogas conveyance means, conveniently constituted by a first pipe, designated by the reference numeral 9, which is made of plastics.

The first pipe 9 has a plurality of first slits, not shown in the figures, that are provided along its entire length, along its entire circumference or only on its upper and/or lower part, which are suitable to collect the biogas generated in the degradation of municipal solid waste.

The slits may also have uneven dimensions along the pipe.

At the upper surface of the loose stone layer 8 there is, conveniently, a layer of protective material, designated by the reference numeral 10, which is preferably synthetic and is suitable to prevent the migration of the fine fraction of the municipal solid waste inside the loose stone layer 8.

This migration might in fact lead to the occlusion of the first slits, consequently making it more difficult to aspirate the biogas.

Below the first pipe 9, advantageously at the lower surface of the loose stone layer 8, there are second means for conveying the permeation liquid (percolate), which are preferably constituted by a second pipe designated by the reference numeral 11.

The second pipe 11 has, along its entire length and only in the lower part and at most in its lateral part, a plurality of second slits suitable to convey the percolate along said second pipe 11, so as to perform a controlled recirculation of the percolate and therefore provide an optimized humidification of the municipal solid waste.

Above the second pipe 11 it is advantageously possible to arrange third means, designated by the reference numeral 12, for separating one another the first and second means.

The third means are preferably constituted by a barrier or partition, provided for example by means of a membrane made of plastic material, so as to prevent any rise of the percolate toward the first pipe 9.

In this manner, the two systems for conveying the biogas and the percolate, provided respectively by the first and second pipes 9 and 11, are kept separate.

The grids constituted by each one of said two or more superimposed levels can have an arrangement of the horizontal drainage systems that is advantageously staggered, so as to facilitate aspiration of the biogas generated in the degradation of the municipal solid waste, which is performed by appropriate aspiration ducts, designated by the reference numeral 13.

The ducts 13 for the aspiration of the generated biogas are connected to an aspiration device, designated by the reference numeral 14, conveniently managed so as to aspirate the optimum amount of biogas.

The aspiration device 14 further allows to perform an effective control of the biogas that is present in the landfill and therefore to acquire information on the state of methanization of the permanent storage facility.

When the active management of the landfill 1 ends, environmental requalification is performed; its first step provides for the placement of a layer of soil, designated by the reference numeral 15, so as to cover said landfill.

Operation is therefore as follows: with reference to Figure 1, the first pipe 9, immersed in the loose stone layer 8 and appropriately provided with slits, can perform effective collection of the biogas that is present in the layer of municipal solid waste associated with the level of horizontal drainage systems 4 of which the first pipe is part.

Each first pipe 9 is further connected to an aspiration device, which is suitable to allow to extract from one or more levels at a time the biogas generated by the landfill, so as to send it to an energy generator suitable for thermal utilization of the biogas and allows to provide data on its composition.

Furthermore, the possibility to control, for example by way of appropriate closure valves, the flow of the biogas in the respective first pipes 9 allows to extract a biogas that is very uniform in its composition and has a low oxygen content, since it is advantageously extracted from the same level of horizontal drainage systems and is therefore obtained from municipal solid waste that has undergone the same fermentation process.

Controlled humidification of the municipal solid waste by the percolate conveyed by the second pipes 11 facilitates the diffusion of the bacteria designed to provide fermentation, ensuring faster obtainment of biogas.

The presence of the layer of protective material 10 further prevents the fine fraction of the municipal solid waste from blocking, over time, the slits of the first pipes 9 suitable to collect the biogas.

The movement of the percolate, i.e., its controlled reinjection in the second pipes 11, can be performed by gravity or by using one or more pumps.

At the end of the second pipes that is arranged proximate to the surface there is advantageously a valve for regulating the circulation of the percolate.

The adjustment valve, not shown in the figures, is conveniently controlled by a plurality of contactors, advantageously of the mechanical or magnetic type, which are suitable to check the flow-rate level inside each mixed drainage system.

It has thus been found that the invention has achieved the intended aim and objects, a permanent storage facility for the disposal of municipal solid waste having been devised which has a high collection of biogas, with a consequent reduced and better-controlled danger of migrations of said biogas.

Said disposal facility allows to collect a biogas of high quality, with a low oxygen content, so as to allow optimum recovery and use thereof in conditions of maximum safety.

Aspiration of the biogas and the controlled transport of the percolate allow to speed up anaerobic fermentation activity, reducing the times and especially the occupied volumes already during active management of the landfill, with a consequent reduction of the costs related to the management requirements of said landfill.

This reduction in the time required for landfill management, including passive management, leads to a reduction in the retention time of the biogas in the permanent storage facility, with a consequent substantial increase in its safety.

The invention is of course susceptible of numerous modifications and variations.

Thus, for example, the shape and arrangement of the horizontal drainage systems can be different from the illustrated one; it is also possible to use oblique or curved drainage systems, according to the specific requirements of each landfill.

It is also possible to place vertical shafts for connecting one another the various horizontal drainage systems, for better biogas circulation.

The materials used and the dimensions that constitute the individual components of the invention may of course be more pertinent according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A permanent storage facility (1), particularly for the disposal of municipal solid waste, comprising a plurality of horizontal drainage systems (4a,4b) that are connected to each other **characterized in that** it further comprises a device for aspirating the generated biogas and **in that** said horizontal drainage systems are arranged in a grid, so as to form one or more superimposed layers, said horizontal drainage systems being constituted by a loose stone layer (8) that is permeable to liquids and inside which there are first biogas conveyance means (9), second percolate conveyance means (11), and third means (12) for separating one another said first and second conveyance means.

2. The permanent storage facility according to claim 1, wherein an excavation (2) is provided for the placement of a layer of municipal solid waste, **characterized in that** multiple trenches are conveniently provided at said layer in a grid-like configuration, each one of said horizontal drainage systems being arranged in each one of said trenches.

3. The permanent storage facility according to claims 1 and 2, **characterized in that** each one of said horizontal drainage systems is preferably constituted by said liquid-permeable loose stone layer, which is internally provided with said first means for conveying the biogas, conveniently constituted by a first pipe preferably made of plastics.

4. The permanent storage facility according to claims 1 and 3, **characterized in that** said first pipe has multiple first slits formed along its entire length, along the circumference or only on its upper and/or lower part, said slits being suitable to collect the biogas generated in the degradation of the municipal solid waste.

5. The permanent storage facility according to claims 1 and 4, **characterized in that** a layer (10) of preferably synthetic protective material is conveniently arranged at the upper surface of said loose stone layer and is suitable to prevent the migration of the fine fraction of the municipal solid waste inside said loose stone layer, avoiding the danger of blockage of said first slits.

6. The permanent storage facility according to claims 1 and 5, **characterized in that** it has, below said first pipe and at the lower surface of said loose stone layer, said second means for conveying the percolate, which are preferably constituted by a second pipe.

7. The permanent storage facility according to claims 1 and 6, **characterized in that** said second pipe has, along its entire length, multiple second slits suitable to convey the percolate along said second pipe, so as to produce a controlled recirculation of the percolate and therefore an optimized humidification of the municipal solid waste.

8. The permanent storage facility according to claims 1 and 7, **characterized in that** above said second pipe it is possible to arrange said third separation means, preferably constituted by a barrier or a partition, such as a membrane made of plastics, so as to prevent any rise of the percolate toward said first pipe.

9. The permanent storage facility according to claims 1 and 8, **characterized in that** one or more biogas aspiration ducts are associated with said first pipes, for connection to said aspiration device, which is suitable to send said biogas to a disposal and/or utilization plant.

10. The permanent storage facility according to one or more of the preceding claims, wherein a first layer of municipal solid waste is placed above said excavation, **characterized in that** multiple trenches arranged in a grid-like configuration are conveniently formed at said first layer for the positioning of first horizontal drainage systems that constitute a first level.

11. The permanent storage facility according to claims 1 and 10, **characterized in that** a second layer of municipal solid waste is then placed on top of said first level and a second level is formed thereat, said second level being constituted by second horizontal drainage systems and being superimposed on said first level.

12. The permanent storage facility according to claims 1 and 11, **characterized in that** said second horizontal drainage systems are identical to said first horizontal drainage systems.

13. The permanent storage facility according to claims 1 and 11, **characterized in that** it has successive levels of horizontal drainage systems, which are conveniently superimposed on each other and on said second level.

14. The permanent storage facility according to claims 1 and 13, **characterized in that** said meshes constituted by each one of said two or more superimposed levels have a staggered arrangement of said horizontal drainage systems, so as to facilitate aspiration of the biogas on the part of said one or more aspiration ducts.

15. The permanent storage facility according to one or more of the preceding claims, **characterized in that** said horizontal drainage systems are connected one another, so as to form said mesh, preferably by virtue of an arrangement along two mutually perpendicular directions.

16. The permanent storage facility according to one or more of the preceding claims, **characterized in that** said horizontal drainage systems have a trapezoidal cross-section.

17. The permanent storage facility according to one or more of the preceding claims, **characterized in that** said horizontal drainage systems have a rectangular transverse cross-section.

18. The permanent storage facility according to one or more of the preceding claims, **characterized in that** said horizontal drainage systems have a rhomboidal transverse cross-section.

19. The permanent storage facility according to one or more of the preceding claims, **characterized in that** said horizontal drainage systems have a transverse cross-section that is shaped like a triangle in which one vertex is directed downward.

20. The permanent storage facility according to one or more of the preceding claims, **characterized in that** said liquid-permeable loose stone layer is provided by means of washed gravel.

21. The permanent storage facility according to one or more of the preceding claims, **characterized in that** said horizontal drainage systems have an oblique and/or curved arrangement, depending on the specific requirements of said permanent storage facility.

22. The permanent storage facility according to one or more of the preceding claims, **characterized in that** it provides for vertical shafts suitable to connect one another said horizontal drainage systems.

23. The permanent storage facility according to one or more of the preceding claims, **characterized in that** at the end of said second pipes that is located proximate to the surface there is at least one valve for regulating the circulation of the percolate, said valve being controlled by a plurality of contactors suitable to check the flow-rate level inside each one of said mixed drainage systems.

## Patentansprüche

1. Eine permanente Lagereinrichtung (1), insbesondere zur Entsorgung von festem Hausmüll, die eine Vielzahl horizontaler Abflußsysteme (4a, 4b) umfasst, welche miteinander verbunden sind, **dadurch gekennzeichnet, dass** sie weiter eine Vorrichtung zum Ansaugen des erzeugten Biogases umfasst und **dadurch**, dass die horizontalen Abflußsysteme in einem Gitter angeordnet sind, so dass sie eine oder mehrere übereinander gelagerte Schichten bilden, wobei die horizontalen Abflußsysteme aus einer lockeren Steinschicht (8) bestehen, die für Flüssigkeiten durchlässig ist, und in der sich folgendes befindet: erste Biogas-Beförderungsmittel (9), zweite Perkolat-Beförderungsmittel (11) und dritte Mittel (12), um das erste und das zweite Beförderungsmittel voneinander zu trennen.

2. Die permanente Lagereinrichtung gemäß Anspruch 1, worin ein Aushub (2) für die Plazierung einer Schicht von festem Hausmüll bereitgestellt wird, **dadurch gekennzeichnet, dass** mehrere Rinnen geeigneterweise in einer gitterähnlichen Anordnung in dieser Schicht bereitgestellt werden, wobei jedes der horizontalen Abflußsysteme in jeder der Rinnen angeordnet ist.

3. Die permanente Lagereinrichtung gemäß den Ansprüchen 1 und 2, **dadurch gekennzeichnet, dass** jedes der horizontalen Abflußsysteme vorzugsweise aus der flüssigkeitsdurchlässigen lockeren Steinschicht besteht, die innen mit dem ersten Mittel zur Beförderung des Biogases, geeigneterweise aus einem ersten Rohr bestehend, das vorzugsweise aus Kunststoff hergestellt ist, ausgestattet ist.

4. Die permanente Lagereinrichtung gemäß den Ansprüchen 1 und 3, **dadurch gekennzeichnet, dass** das erste Rohr mehrere erste Schlitze hat, die entlang seiner gesamten Länge gebildet sind, entlang dem Umfang oder nur an seinem oberen und/oder unteren Teil, wobei die Schlitze geeignet sind, um das Biogas zu sammeln, das beim Abbau des festen Hausmülls erzeugt wird.

5. Die permanente Lagereinrichtung gemäß den Ansprüchen 1 und 4, **dadurch gekennzeichnet, dass** eine Schicht (10) aus vorzugsweise synthetischem Schutzmaterial geeigneterweise auf der oberen Oberfläche der lockeren Steinschicht angebracht ist und geeignet ist, die Migration der feinen Fraktion des festen Hausmülls in die lockere Steinschicht zu verhindern, wodurch die Gefahr einer Blockierung der ersten Schlitze vermieden wird.

6. Die permanente Lagereinrichtung gemäß den Ansprüchen 1 und 5, **dadurch gekennzeichnet, dass** sie unter dem ersten Rohr und an der unteren Oberfläche der lockeren Steinschicht die zweiten Mittel zum Befördern des Perkolats hat, die vorzugsweise aus einem zweiten Rohr bestehen.

7. Die permanente Lagereinrichtung gemäß den Ansprüchen 1 und 6, **dadurch gekennzeichnet, dass** das zweite Rohr entlang seiner gesamten Länge mehrere zweite Schlitze hat, die geeignet sind, das Perkolat entlang dem zweiten Rohr zu befördern, um eine gesteuerte Rückführung des Perkolats und so eine optimierte Befeuchtung des festen Hausmülls zu erzeugen.

8. Die permanente Lagereinrichtung gemäß den Ansprüchen 1 und 7, **dadurch gekennzeichnet, dass** es möglich ist, über dem zweiten Rohr das dritte Trennungsmittel anzuordnen, das vorzugsweise aus einer Barriere oder einer Trennwand besteht, wie zum Beispiel einer Membran hergestellt aus Kunststoff, um einen Anstieg des Perkolats zum ersten Rohr hin zu verhindern.

9. Die permanente Lagereinrichtung gemäß den Ansprüchen 1 und 8, **dadurch gekennzeichnet, dass** eine oder mehrere Biogas-Ansaugleitungen mit den ersten Rohren verknüpft sind, zur Verbindung mit der Ansaugvorrichtung, die geeignet ist, um das Biogas an eine Entsorgungs- und/oder Verwertungsanlage zu leiten.

10. Die permanente Lagereinrichtung gemäß einem oder mehreren der obigen Ansprüche, worin eine erste Schicht von festem Hausmüll über den Aushub plaziert wird, **dadurch gekennzeichnet, dass** mehrere Rinnen, angeordnet in einer gitterähnlichen Konfiguration, geeigneterweise in der ersten Schicht gebildet sind, zur Positionierung erster horizontaler Abflußsysteme, die eine erste Ebene bilden.

11. Die permanente Lagereinrichtung gemäß den Ansprüchen 1 und 10, **dadurch gekennzeichnet, dass** dann eine zweite Schicht von festem Hausmüll über die erste Ebene plaziert wird und eine zweite Ebene dort gebildet wird, wobei die zweite Ebene aus zweiten horizontalen Abflußsystemen besteht und die erste Ebene überlagert.

12. Die permanente Lagereinrichtung gemäß den Ansprüchen 1 und 11, **dadurch gekennzeichnet, dass** die zweiten horizontalen Abflußsysteme identisch mit den ersten horizontalen Abflußsystemen sind.

13. Die permanente Lagereinrichtung gemäß den Ansprüchen 1 und 11, **dadurch gekennzeichnet, dass** sie sukzessive Ebenen horizontaler Abflußsysteme hat, die geeigneterweise übereinander und über die zweite Ebene gelagert sind.

14. Die permanente Lagereinrichtung gemäß den Ansprüchen 1 und 13, **dadurch gekennzeichnet, dass** die Maschen, die aus jeder der zwei oder mehr übereinander gelagerten Ebenen bestehen, eine versetzte Anordnung der horizontalen Abflußsysteme haben, um das Ansaugen des Biogases an der Seite der einen oder der mehreren Ansaugleitungen zu erleichtern.

15. Die permanente Lagereinrichtung gemäß einem oder mehreren der obigen Ansprüche, **dadurch gekennzeichnet, dass** die horizontalen Abflußsysteme miteinander verbunden sind, um die Masche zu bilden, vorzugsweise durch eine Anordnung entlang zweier zueinander rechtwinkliger Richtungen.

16. Die permanente Lagereinrichtung gemäß einem oder mehreren der obigen Ansprüche, **dadurch gekennzeichnet, dass** die horizontalen Abflußsysteme einen trapezförmigen Querschnitt haben.

17. Die permanente Lagereinrichtung gemäß einem oder mehreren der obigen Ansprüche, **dadurch gekennzeichnet, dass** die horizontalen Abflußsysteme einen rechteckigen transversalen Querschnitt haben.

18. Die permanente Lagereinrichtung gemäß einem oder mehreren der obigen Ansprüche, **dadurch gekennzeichnet, dass** die horizontalen Abflußsysteme einen rhomboidförmigen transversalen Querschnitt haben.

19. Die permanente Lagereinrichtung gemäß einem oder mehreren der obigen Ansprüche, **dadurch gekennzeichnet, dass** die horizontalen Abflußsysteme einen transversalen Querschnitt haben, der wie ein Dreieck geformt ist, in dem ein Scheitelpunkt nach unten gerichtet ist.

20. Die permanente Lagereinrichtung gemäß einem oder mehreren der obigen Ansprüche, **dadurch gekennzeichnet, dass** die flüssigkeitsdurchlässige lockere Steinschicht von gewaschenem Kies gebildet wird.

21. Die permanente Lagereinrichtung gemäß einem oder mehreren der obigen Ansprüche, **dadurch gekennzeichnet, dass** die horizontalen Abflußsysteme eine schiefe und/oder gekrümmte Anordnung haben, je nach den spezifischen Erfordernissen der permanenten Lagereinrichtung.

22. Die permanente Lagereinrichtung gemäß einem oder mehreren der obigen Ansprüche, **dadurch gekennzeichnet, dass** sie senkrechte Schächte bereitstellt, die geeignet sind, die horizontalen Abflußsysteme miteinander zu verbinden.

23. Die permanente Lagereinrichtung gemäß einem oder mehreren der obigen Ansprüche, **dadurch gekennzeichnet, dass** an dem Ende der zweiten Rohre, das sich nahe der Oberfläche befindet, mindestens ein Ventil zur Regulierung der Zirkulation des Perkolats ist, wobei das Ventil von einer Vielzahl von Schalt-Schützen gesteuert wird, die geeignet sind, die Strömungsgeschwindigkeit in jedem der gemischten Abflußsysteme zu steuern.

## Revendications

1. Installation (1) de stockage permanent, en particulier pour l'élimination de déchets urbains solides, comprenant une pluralité de systèmes (4a, 4b) de drainage horizontal qui sont reliés entre eux, **caractérisée en ce qu'**elle comprend en outre un dispositif pour l'aspiration du biogaz généré et **en ce que** lesdits systèmes de drainage horizontal sont agencés dans une grille, de façon à former une ou plusieurs couches superposées, lesdits systèmes de drainage horizontal étant constitués d'une couche (8) de gravier qui est perméable aux liquides et à l'intérieur de laquelle se trouvent un premier moyen (9) d'acheminement de biogaz, un deuxième moyen (11) d'acheminement du percolé, et un troisième moyen (12) pour séparer l'un de l'autre lesdits premier et deuxième moyens d'acheminement.

2. Installation de stockage permanent selon la revendication 1, dans laquelle une excavation (2) est prévue pour le placement d'une couche de déchets urbains solides, **caractérisée en ce que** de multiples fossés sont de façon convenable prévus sur ladite couche dans une configuration en grille, chacun desdits systèmes de drainage horizontal étant agencé dans chacun desdits fossés.

3. Installation de stockage permanent selon les revendications 1 et 2, **caractérisée en ce que** chacun desdits systèmes de drainage horizontal est constitué de préférence d'une couche de gravier perméable aux liquides, qui est munie intérieurement dudit premier moyen pour acheminer le biogaz, constitué de façon convenable par un premier tuyau réalisé de préférence en matière plastique.

4. Installation de stockage permanent selon les revendications 1 et 3, **caractérisée en ce que** ledit premier tuyau présente de multiples fentes formées sur toute sa longueur, le long de sa circonférence ou seulement sur sa partie supérieure et/ou inférieure, lesdits fentes étant aptes à collecter le biogas généré par la dégradation des déchets urbains solides.

5. Installation de stockage permanent selon les revendications 1 et 4, **caractérisée en ce qu'**une couche (10) de préférence de matière de protection synthétique est agencée de façon convenable au niveau de la surface supérieure de ladite couche de gravier et est apte à prévenir la migration de la fraction fine des déchets urbains solides à l'intérieur de ladite couche de gravier évitant le risque d'obstruction desdites premières fentes.

6. Installation de stockage permanent selon les revendications 1 et 5, **caractérisée en ce qu'**elle présente, sous ledit premier tuyau et au niveau de la surface inférieure de ladite couche de gravier, un deuxième moyen pour acheminer le percolé, qui est de préférence constitué par un deuxième tuyau.

7. Installation de stockage permanent selon les revendications 1 et 6, **caractérisé en ce que** ledit deuxième tuyau présente, sur toute sa longueur, de multiples fentes aptes à acheminer le percolé le long du deuxième tuyau, de façon à produire une recirculation contrôlée du percolé et ainsi une humidification optimisée des déchets urbains solides.

8. Installation de stockage permanent selon les revendications 1 et 7, **caractérisée en ce qu'**il est possible d'agencer, au dessus dudit deuxième tuyau, ledit troisième moyen de séparation, constitué de préférence par une barrière ou une cloison, telle qu'une membrane en matière plastique, de façon à prévenir toute remontée du percolé vers ledit premier tuyau.

9. Installation de stockage permanent selon les revendications 1 et 8, **caractérisée en ce que** l'un ou plusieurs des conduits d'aspiration de biogaz sont associés auxdits premiers tuyaux, pour la liaison audit dispositif d'aspiration, qui est approprié pour envoyer le biogaz à une installation d'utilisation et/ou d'élimination.

10. Installation de stockage permanent selon l'une ou plusieurs des revendications précédentes, dans laquelle une première couche de déchets urbains solides est placée au-dessus de ladite excavation, **caractérisée en ce que** de multiples tranchées agencées dans une configuration en grille sont formées de façon convenable au niveau de ladite première couche pour le positionnement de premiers systèmes de drainage horizontal qui constituent un premier niveau.

11. Installation de stockage permanent selon les revendications 1 et 10, **caractérisée en ce qu'**une deuxième couche de déchets urbains solides est ensuite placée au sommet du premier niveau et un deuxième niveau est ainsi formé, ledit deuxième niveau étant constitué par des deuxièmes systèmes de drainage horizontal et étant superposé audit premier niveau.

12. Installation de stockage permanent selon les revendications 1 et 11, **caractérisée en ce que** lesdits deuxièmes systèmes de drainage horizontal sont identiques auxdits premiers systèmes de drainage horizontal.

13. Installation de stockage permanent selon les revendications 1 et 11, **caractérisée en ce qu'**elle présente des niveaux successifs de systèmes de drainage horizontal, qui sont superposés de façon convenable l'un à l'autre et audit deuxième niveau.

14. Installation de stockage permanent selon les revendications 1 et 13, **caractérisée en ce que** lesdits filets constitués par chacun desdits deux ou plusieurs niveaux superposés présentent un agencement en quinconce desdits systèmes de drainage horizontal, de façon à faciliter l'aspiration du biogaz par un ou plusieurs desdits conduits d'aspiration.

15. Installation de stockage permanent selon l'une ou plusieurs des revendications précédentes, **caractérisée en ce que** lesdits systèmes de drainage horizontal sont reliés l'un à l'autre, de façon à former ledit filet, de préférence en vertu d'un agencement le long de deux directions mutuellement perpendiculaires.

16. Installation de stockage permanent selon l'une ou plusieurs des revendications précédentes, **caractérisée en ce que** lesdits systèmes de drainage horizontal présentent une section transversale trapézoïdale.

17. Installation de stockage permanent selon l'une ou plusieurs des revendications précédentes, **caractérisée en ce que** lesdits systèmes de drainage horizontal présentent une section transversale rectangulaire.

18. Installation de stockage permanent selon l'une ou plusieurs des revendications précédentes, **caractérisée en ce que** lesdits systèmes de drainage horizontal présentent une section transversale rhomboïdale.

19. Installation de stockage permanent selon l'une ou plusieurs des revendications précédentes, **caractérisée en ce que** lesdits systèmes de drainage horizontal présentent une section transversale qui a la forme d'un triangle ayant un sommet dirigé vers le bas.

20. Installation de stockage permanent selon l'une ou plusieurs des revendications précédentes, **caractérisée en ce que** ladite couche de gravier perméable au liquide est réalisée au moyen de gravier lavé.

21. Installation de stockage permanent selon l'une ou plusieurs des revendications précédentes, **caractérisée en ce que** lesdits systèmes de drainage horizontal présentent un agencement oblique et/ou courbe, selon les exigences spécifiques de ladite installation de stockage permanent.

22. Installation de stockage permanent selon l'une ou plusieurs des revendications précédentes, **caractérisée en ce qu'**elle est munie d'arbres verticaux aptes à relier l'un à l'autre lesdits systèmes de drainage horizontal.

23. Installation de stockage permanent selon l'une ou plusieurs des revendications précédentes, **caractérisée en ce que**, au niveau de l'extrémité desdits deuxièmes tuyaux qui sont situés à proximité de la surface, il y a au moins une valve pour la régulation de la circulation du percolé, ladite valve étant commandé par une pluralité de contacteurs aptes à contrôler le niveau de débit d'écoulement à l'intérieur de chacun desdits systèmes de drainage mixte.
